# EUROPÄISCHE PATENTSCHRIFT

(11) **EP 2 877 754 B1**
(45) Veröffentlichungstag und Bekanntmachung des Hinweises auf die Patenterteilung: **25.04.2018**
(21) Anmeldenummer: 13739698.2
(22) Anmeldetag: 19.07.2013
(51) Int. Cl.: F16D 65/18, F16J 3/04, F16D 55/226

(54) **SCHEIBENBREMSE FÜR EIN NUTZFAHRZEUG**
DISC BRAKE FOR A COMMERCIAL VEHICLE
FREIN À DISQUE POUR VÉHICULE UTILITAIRE

(30) Priorität: 26.07.2012 DE 102012014799
(43) Veröffentlichungstag der Anmeldung: 03.06.2015
(73) Patentinhaber: KNORR-BREMSE Systeme für Nutzfahrzeuge GmbH, 80809 München (DE)
(72) Erfinder: WEGGARTNER, Robert, 84347 Pfarrkirchen (DE); ÖZER, Sükrü, 94501 Aldersbach (DE)
(86) Internationale Anmeldenummer: PCT/EP2013/065357
(87) Internationale Veröffentlichungsnummer: WO 2014/016224

(56) Entgegenhaltungen:
- WO-A1-2010/049133
- DE-A1- 10 313 696
- DE-A1-102005 028 754
- DE-C1- 19 515 063
- US-A1- 2004 026 194

## Beschreibung

Die Erfindung betrifft eine Scheibenbremse für ein Nutzfahrzeug gemäß dem Oberbegriff des Anspruchs 1.

Aus der DE 195 15 063 C1 ist eine solche Scheibenbremse bekannt, bei der die Druckstücke als separate Bauteile mit den zugeordneten Stellspindeln verbunden sind.

Um den Austrittsbereich der jeweiligen Stellspindel aus dem Bremssattel hin zum Bremsbelag abzudichten, ist jeder Stellspindel ein Faltenbalg zugeordnet, durch den der Austrittsbereich vor Verschmutzung und Witterungseinflüssen geschützt ist.

Dabei ist der Faltenbalg einerseits in eine Verschlussplatte eingepresst, die eine Montageöffnung des Bremssattels verschließt und die von den Stellspindeln durchtreten wird, und andererseits an der Stellspindel oder am Druckstück gehalten. Für den Fall einer einstückigen Ausbildung des Bremssattels, wenn also keine Verschlussplatte zum Einsatz kommt, ist der Faltenbalg direkt am Bremssattel, vorzugsweise ebenfalls durch Einpressen befestigt.

Zur axialen Beweglichkeit des Faltenbalges, insbesondere beim Zuspannen der Bremse, besteht der Faltenbalg in seinem formbaren Bereich aus einem Elastomer.

Konstruktionsbedingt befindet sich der Faltenbalg in unmittelbarer Nähe zum Druckstück und der Stellspindel, wobei das Druckstück direkt am Bremsbelag, d.h. einer einen Reibbelag tragenden Belagträgerplatte anliegt.

Im Fall einer Bremsung heizen sich aufgrund der entstehenden Reibungswärme sowohl die Belagträgerplatte wie auch das Druckstück sehr stark auf.

In der Folge kommt es häufig zu einer Kontaktierung des Faltenbalgs am Druckstück, die zu einer thermischen Überlastung des Elastomers führt, das dadurch spröde und in Konsequenz undicht wird.

Auch besteht die Gefahr, dass der Faltenbalg mit seinem Elastomerbereich mit dem Druckstück verklebt, wodurch die Beweglichkeit des Faltenbalgs eingeschränkt und bei zunehmendem Verschleiß sogar zu dessen Zerstörung führt.

Auch die thermische Abstrahlung des Bremsbelages, d.h. der Belagträgerplatte führt zu einer Beschädigung des Faltenbalgs und letztlich zu dessen Funktionsausfall infolge von Undichtigkeit.

Damit besteht aber die Gefahr, dass die zu schützenden Bauteile, wie die Stellspindel einschließlich Gewindelagerungen im Bremssattel, beschädigt werden, so dass es unter Umständen zu einer Störung dieser Funktionsteile bis hin zu deren Ausfall kommen kann.

In der US 2004/026194 A1 ist eine Schutzkappe für eine Kolben-Zylindereinheit einer Scheibenbremse offenbart, die einen Übergangsbereich zwischen einem Kolben und einem Zylinder abdichtet, wobei diese Schutzkappe als Faltenbalg ausgebildet ist, der Abstandshalter in Form von Noppen oder Rippen aufweist, die bei funktionsbedingter Faltung des Faltenbalges an einem Bremsbelag anliegen.

Der Erfindung liegt die Aufgabe zugrunde, eine Scheibenbremse der gattungsgemäßen Art so weiterzuentwickeln, dass ihre Betriebssicherheit verbessert und die Standzeit erhöht wird.

Diese Aufgabe wird durch eine Scheibenbremse mit den Merkmalen des Anspruchs 1 gelöst.

Durch die in diesem Sinne ausgebildete Scheibenbremse, insbesondere der Faltenbälge, ergeben sich eine ganze Reihe von Vorteilen, die im Wesentlichen dadurch erreicht werden, dass die funktionsrelevanten Bereiche der Faltenbälge nun nicht mehr in unmittelbarem Kontakt mit den jeweiligen Druckstücken geraten und ihre Wärmebeaufschlagung minimiert wird.

Die Beanspruchung der Faltenbälge sowohl durch die beim Bremsen entstehende Reibungshitze wie auch durch mechanische Belastungen, insbesondere durch Witterungseinflüsse oder durch im Fahrbetrieb eindringende Partikel, namentlich Steinchen oder dergleichen, wird nun soweit herabgesetzt, dass praktisch keine Einschränkung der optimalen Standzeit zu befürchten ist.

Naturgemäß ist dies mit einer durchaus bemerkenswerten Kostenreduzierung verbunden, vor allem da nun diesbezügliche Reparaturarbeiten, wenn überhaupt nur in sehr viel längeren Zeiträumen erforderlich sind, wobei nicht nur der Reparaturaufwand, sondern auch die dazu notwendigen Stillstandszeiten des Nutzfahrzeuges zu rechnen sind.

Nach einer vorteilhaften Weiterbildung der Erfindung ist vorgesehen, den jeweiligen Abstandshalter einstückig mit dem Faltenbalg auszubilden, d.h., ebenfalls aus einem Elastomer, wobei der Abstandshalter unmittelbar bei der Herstellung des Faltenbalges angebracht werden kann.

Gegenüber einer mehrstückigen Ausbildung, die durchaus denkbar ist, stellt sich die einstückige Konzeption als gegenüber dem bekannten Faltenbalg im Wesentlichen kostenneutral dar.

Nach der Erfindung besteht der Abstandshalter aus einem abständig zu den potentiell gefährdeten Faltungen des Faltenbalgs angeordneten und diese überdeckenden umlaufenden Kragen, der ebenfalls einstückig mit dem Faltenbalg ausgebildet sein kann, in jedem Fall jedoch fest mit diesem verbunden ist.

Dabei wirkt dieser Kragen wie ein ringförmiger Schirm, der durch den Abstand zu den Faltungen eine Isolierschicht bildet, andererseits am Druckstück zur Anlage kommen kann und damit sozusagen eine zweite Schicht bildet, ohne den Faltenbalg im Übrigen in Mitleidenschaft zu ziehen.

Aufgrund der verminderten Belastung des Faltenbalges und der sich daraus ergebenden höheren Standzeit, sind auch die zu schützenden Funktionsteile, wie beispielsweise die genannten Stellspindeln, dauerhaft geschützt, wodurch sich eine Verbesserung der Betriebssicherheit auch dieser Funktionsteile ergibt.

Im Übrigen besteht die Möglichkeit, den neuen Faltenbalg nachträglich zu montieren, wenn beispielsweise bei einem Bremsbelagwechsel das Druckstück ebenfalls ausgetauscht wird, mit dem daran befestigten Faltenbalg.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Teilausschnitt einer Scheibenbremse nach dem Stand der Technik in einer geschnittenen Draufsicht
- Figur 2: ein Ausführungsbeispiel eines erfindungsgemäßen Faltenbalgs als Einzelheit in einer geschnittenen Seitenansicht.

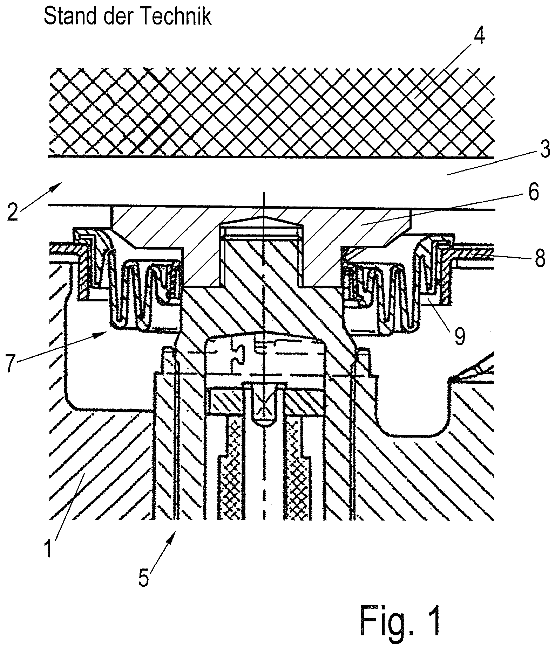

In der Figur 1 ist ein Teil einer Scheibenbremse nach dem Stand der Technik dargestellt, die einen als Schiebesattel ausgebildeten Bremssattel 1 aufweist.

Mittels einer Zuspanneinrichtung ist über Stellspindeln 5, von denen in der Figur lediglich eine dargestellt ist und die im Bremssattel 1 gelagert sind, ein Bremsbelag 2 gegen eine nicht dargestellte Bremsscheibe pressbar, wobei mit der Stellspindel 5 ein Druckstück 6 angeschlossen ist, das am Bremsbelag 2 anliegt.

Dabei besteht der Bremsbelag 2 aus einer Trägerplatte 3 und einem darauf befestigten Reibbelag 4, der die Bremsscheibe im Fall einer Bremsung kontaktiert. Das Druckstück 6, das an die Stellspindel 5 angeschraubt ist, liegt hierbei an der Trägerplatte 3 an.

Im Beispiel ist der Bremssattel 1 auf seiner dem Bremsbelag 2 zugewandten Seite weitgehend durch eine Verschlussplatte 8 verschlossen, die von der Stellspindel 5 durchtreten ist, wozu die Verschlussplatte 8 eine Durchtrittsöffnung 9 aufweist.

Zur Abdichtung der Durchtrittsöffnung 9 ist ein mit der Verschlussplatte 8 verdrehsicher verbundener Faltenbalg 7 vorgesehen, der andererseits an der Stellspindel 5 bzw. am Druckstück 6 hermetisch dicht anliegt.

Gemäß der Erfindung weist der Faltenbalg 7 auf seiner dem Druckstück 6 zugewandten Seite mindestens einen Abstandshalter auf.

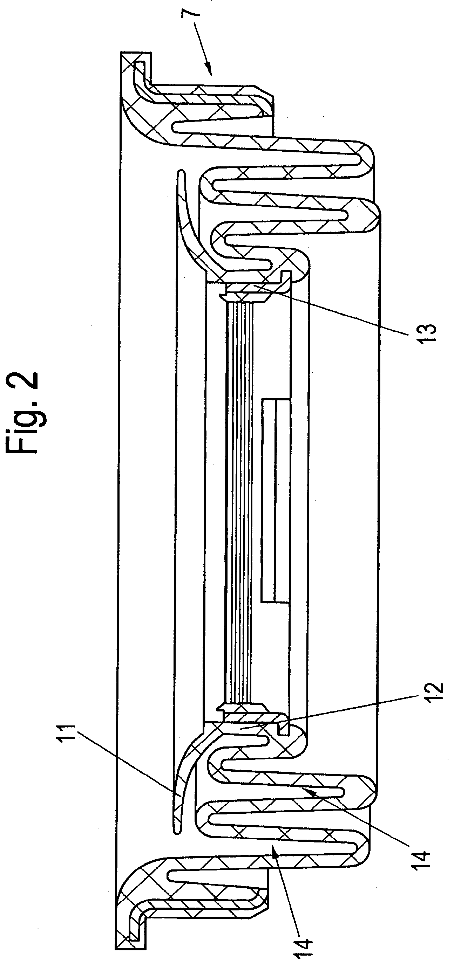

Bei dem in der Figur 2 gezeigten Beispiel besteht der Abstandshalter aus einem konzentrischen Kragen 11, der an einen in der Stellspindel 5 bzw. dem Druckstück 6 anliegenden Dichtring 12 angeformt ist und der ebenfalls aus Elastomer besteht. In diesen Dichtring 12 ist ein metallischer Stützring 13 eingebettet, um eine ausreichende Dichtpressung an der Stellspindel 5 zu erreichen.

Der Kragen 11 ist lediglich einseitig und zwar an dem genannten Dichtring 12 gehalten, so dass sich ein radial nach außen erstreckender Flügel ergibt, der die Faltungen 14 mit geringem Abstand überdeckt. Denkbar ist auch, den Kragen an der äußeren Faltung 14 anzuschließen, so dass er nach innen ausgerichtet ist.

### Bezugszeichenliste

- 1: Bremssattel
- 2: Bremsbelag
- 3: Trägerplatte
- 4: Reibbelag
- 5: Stellspindel
- 6: Druckstück
- 7: Faltenbalg
- 8: Verschlussplatte
- 9: Durchtrittsöffnung
- 10: Noppen
- 11: Kragen
- 12: Dichtring
- 13: Stützring
- 14: Faltung

## Patentansprüche

1. Scheibenbremse für ein Nutzfahrzeug, mit einem eine Bremsscheibe übergreifenden Bremssattel (1), darin gelagerten Bremsbelägen (2), die die Bremsscheibe in Funktionsstellung kontaktieren, wobei mindestens ein Bremsbelag (2), mit einer Trägerplatte (3) und einem daran befestigten Reibbelag (4) mittels einer Zuspanneinrichtung über zumindest eine im Bremssattel (1) gelagerte Stellspindel (5) und ein damit verbundenes Druckstück (6) an die Bremsscheibe andrückbar ist, wobei zur Abdichtung einer Durchtrittsöffnung (9) der Stellspindel (5) aus dem Bremssattel (1) oder einer Verschlussplatte (8) ein daran direkt oder indirekt befestigter Faltenbalg (7) aus einem Elastomer vorgesehen ist, **dadurch gekennzeichnet, dass** der Faltenbalg (7) auf seiner dem Druckstück (6) zugewandten Seite zumindest bereichsweise mindestens einen Abstandshalter aufweist, der aus einem umlaufenden Kragen (11) gebildet ist.

2. Scheibenbremse nach Anspruch 1, **dadurch gekennzeichnet, dass** der Abstandshalter einstückig an den Faltenbalg (7) angeformt ist.

3. Scheibenbremse nach Anspruch 1 oder 2, **dadurch gekennzeichnet, dass** der Kragen (11) einseitig an einen an der Stellspindel (5) oder dem Druckstück (6) anliegenden Dichtring (12) oder einer äußeren Faltung (14) angeformt ist.

4. Scheibenbremse nach einem der vorhergehenden Ansprüche, **dadurch gekennzeichnet, dass** der Kragen (11) die Faltungen (14) im Bereich mehrerer Kehren überdeckt.

5. Scheibenbremse nach einem der vorhergehenden Ansprüche, **dadurch gekennzeichnet, dass** der Kragen (11) mit geringem Abstand zu den Faltungen (14) angeordnet ist.

## Claims

1. A disc brake for a utility vehicle having a brake calliper (1) which extends around a brake disc and in which are mounted brake linings that make contact with the brake disc in the operating position, it being possible to press at least one brake lining (2) with a base plate (3) and a friction lining (4) fixed to it against the brake disc by means of an application device via at least one adjusting spindle (5) mounted in the brake calliper (1) and a pressure part (6) that is connected to it, there being provided to seal an opening (9) in the adjusting spindle (5) comprising the brake calliper (1) or a closure plate (8) a bellows (7) comprising an elastomer fixed directly or indirectly to said adjusting spindle, **characterised in that** in at least one region the side of the bellows (7) facing the pressure part (6) has at least one spacer that is formed of a circumferential collar (11).

2. A disc brake according to claim 1, **characterised in that** the spacer is mouled in one piece to the bellows (7).

3. A disc brake according to claim 1 or 2, **characterised in that** one end of the collar (11) is moulded to a sealing ring abutting the adjusting spindle (5) or the pressure part (6) or to an outer fold (14).

4. A disc brake according to one of the preceding claims, **characterised in that** the collar (11) covers the folds (14) in the region of a plurality of turns.

5. A disc brake according to one of the preceding claims, **characterised in that** the collar (11) is positioned a short distance from the folds (4).

## Revendications

1. Frein à disque pour un véhicule utilitaire, comprenant un étrier (1) de frein, chevauchant un disque de frein, des garnitures (2) de frein, qui y sont montées et qui entrent en contact avec le disque de frein en la position de fonctionnement, dans lequel au moins une garniture (2) de frein peut être poussée sur le disque de frein par un plateau (3) de support et une garniture (4) de friction, qui y est fixée, au moyen d'un dispositif de serrage par au moins une broche (5) de réglage montée dans l'étrier (1) de frein et par une pièce (6) d'application d'une pression, qui y est reliée, dans lequel, pour rendre étanche une ouverture (9) de passage de la broche (5) de réglage, il est prévu, à partir de l'étrier (1) de frein ou d'une plaque (8) de fermeture, un soufflet (7) à plis en élastomère, qui y est fixé directement ou indirectement, **caractérisé en ce que** le soufflet (7) à plis a, du côté tourné vers la pièce (6) d'application d'une pression, au moins par endroit, au moins une entretoise, qui est formée d'un collet (11) faisant le tour.

2. Frein à disque suivant la revendication 1, **caractérisé en ce que** l'entretoise est formée d'une seule pièce avec le soufflet (7) à plis.

3. Frein à disque suivant la revendication 1 ou 2, **caractérisé en ce que** le collet (11) est formé unilatéralement sur un joint (12) s'appliquant à la broche (5) de réglage ou à la pièce (6) d'application d'une pression ou sur un pli (14) extérieur.

4. Frein à disque suivant l'une des revendications précédentes, **caractérisé en ce que** le collet (11) recouvre les plis (14) dans la région de plusieurs tournants.

5. Frein à disque suivant l'une des revendications précédentes, **caractérisé en ce que** le collet (11) est disposé à une distance petite des plis (14).
